Europäisches Patentamt

European Patent Office

Office européen des brevets

(11) Numéro de publication: **0 277 892**
**A1**

## DEMANDE DE BREVET EUROPEEN

(21) Numéro de dépôt: **88420018.9**

(22) Date de dépôt: **21.01.88**

(51) Int. Cl.⁴: **G 21 B 1/00**

(30) Priorité: **23.01.87 FR 8700807**

(43) Date de publication de la demande:
**10.08.88 Bulletin 88/32**

(84) Etats contractants désignés:
**AT BE CH DE ES FR GB GR IT LI LU NL SE**

(71) Demandeur: **NOVATOME**
**Tour Fiat 1, place de la Coupole**
**F-92400 - Courbevoie (FR)**

**URANIUM PECHINEY**
**Tour Manhattan, La Défense 2, 6, place de l'Iris,**
**F-92400 Courbevoie (FR)**

**LE CARBONE LORRAINE**
**Tour Manhattan - La Défense 2, 5-6, place de l'Iris,**
**F-92400 Courbevoie (FR)**

(72) Inventeur: **Archer, Jacques**
**5, rue du Mérou**
**F-92290 Chatenay-Malabry (FR)**

**Stalport, Gérard**
**46, avenue Georges Pompidou**
**F-69003 Lyon (FR)**

**Besson, Daniel**
**3, rue Gabriel Chevallier**
**F-69009 Lyon (FR)**

**Coulon, Michel**
**Les Cèdres, Les Hauts de St. Nicolas**
**FR-95130 LE PLESSIS BOUCHARD (FR)**

**FARON, Robert**
**5, Avenue Victor Hugo**
**FR-92400 COURBEVOIE (FR)**

(74) Mandataire: **Pascaud, Claude et al**
**PECHINEY 28, rue de Bonnel**
**F-69433 Lyon Cédex 3 (FR)**

(54) **Dispositif de refroidissement d'un réacteur à fusion thermonucléaire et bloc modulaire de garnissage pour la réalisation d'une paroi d'un tel dispositif.**

(57) Le dispositif de refroidissement ou "divertor" est constitué par des éléments juxtaposés. Chacun des éléments (4a) comporte un ensemble de blocs modulaires (21) en matériau conducteur et résistant à la chaleur tel que le graphite. Les blocs modulaires (21) comportent une partie de tête (21a) présentant une zone d'appui (24) sur les tubes (16) du divertor et une partie de pied (21b) présentant une ouverture d'assemblage (26). Des moyens d'assemblage (28, 29) coopèrent avec les ouvertures (26) pour fixer les blocs (21) sur le support (20) du divertor. Les moyens d'assemblage (28, 29) sont munis de dispositifs (34) de verrouillage et de déverrouillage pour fixer ou libérer les blocs (21) constituant une rangée le long des moyens d'assemblage (28, 29).

FIG.3

EP 0 277 892 A1

## Description

### DISPOSITIF DE REFROIDISSEMENT D'UN REACTEUR A FUSION THERMONUCLEAIRE ET BLOC MODULAIRE DE GARNISSAGE POUR LA REALISATION D'UNE PAROI D'UN TEL DISPOSITIF

L'invention concerne un dispositif de refroidissement d'un réacteur à fusion thermonucléaire et un bloc modulaire de garnissage pour constituer une paroi d'un tel dispositif.

Les réacteurs à fusion thermonucléaire expérimentaux réalisés ou en cours de réalisation comportent une cavité de confinement d'un plasma à très haute température dans lequel se produisent les réactions nucléaires de fusion. La cavité de confinement du plasma est délimitée par une paroi appelée première paroi complétée, pour refermer la cavité, par au moins un dispositif de confinement et de refroidissement appelé "divertor".

On a proposé de réaliser la cavité sous la forme d'un tore à axe vertical, la première paroi et le divertor étant disposés à l'intérieur d'une paroi de blindage assurant la protection autour du réacteur. Cette paroi est traversée par des conduits permettant d'assurer la mise sous vide de la cavité et le refroidissement de divers composants internes du réacteur.

Pour faciliter le montage et l'entretien de la première paroi et du divertor, ces composants sont réalisés sous une forme modulaire, à partir d'éléments juxtaposés. La paroi de blindage comporte des ouvertures de service permettant d'introduire et de mettre en place les éléments modulaires de la première paroi et du divertor, pour constituer la cavité interne du réacteur.

Dans le cas d'une paroi et d'une cavité de forme torique, les éléments modulaires constituant la première paroi et le divertor sont constitués par des segments compris entre deux plans méridiens du tore.

Le réacteur comporte de plus un ensemble de bobinages électromagnétiques permettant de confiner le plasma au centre de la cavité pour éviter qu'il ne vienne en contact avec la première paroi et le divertor. En effet, bien que ces composants soient réalisés en des matériaux résistant à de très hautes températures, la température du plasma est telle qu'un contact prolongé conduirait à une destruction complète de la paroi intérieure de la cavité.

Il peut cependant se produire certains contacts entre le plasma et la paroi interne de la cavité, de façon accidentelle ou pendant certaines phases de fonctionnement du réacteur.

En outre, cette paroi subit un bombardement intense de particules provenant du plasma. L'énergie produite dans le réacteur est ainsi transmise à la paroi de la cavité et doit être évacuée par un dispositif de refroidissement.

C'est en particulier le rôle du divertor qui, en plus de son rôle de confinement du plasma en combinaison avec la première paroi, assure l'évacuation de la chaleur grâce à un ensemble de tubes d'échange thermique incorporés à sa structure dans lesquels circule un fluide de refroidissement.

Chacun des éléments modulaires du divertor comporte un support et un ensemble de tubes d'échange thermique parallèles entre eux et raccordés à des collecteurs de fluide de refroidissement. Le support peut être constitué par un matériau résistant à la chaleur et à bonne conductibilité thermique dans lequel sont ménagés des canaux de passage des tubes de refroidissement. Le support des tubes comporte une face constituant une partie de la surface interne de la cavité et transmet la chaleur produite dans le ré acteur aux tubes de refroidissement. Ce support soumis au bombardement des ʿparticules et à l'action thermique et chimique du plasma subit une forte érosion pendant le fonctionnement du réacteur, si bien que cet élément doit être remplacé périodiquement.

Le remplacement des éléments hors d'usage du divertor est une opération complexe qui nécessite l'utilisation d'un télémanipulateur spécialement conçu pour cet usage.

Le but de l'invention est donc de proposer un dispositif de refroidissement d'un réacteur à fusion thermonucléaire qui comporte une cavité de confinement d'un plasma délimitée par une première paroi complétée par au moins un dispositif de refroidissement, appelé divertor, la paroi et le divertor étant constitués sous forme modulaire par des éléments juxtaposés et chacun des éléments modulaires du divertor comportant un suport et un ensemble de tubes d'échange thermique sensiblement parallèles entre eux pour assurer la circulation d'un fluide de refroidissement, ce divertor ayant une structure permettant de simplifier son entretien et les réparations nécessitées par une érosion de sa paroi.

Dans ce but, les éléments du divertor comportent chacun :
- un ensemble de blocs modulaires en matériau conducteur et résistant à la chaleur, juxtaposés pour constituer une paroi de délimitation de la cavité et comportant chacun une partie de tête de forme prismatique ayant une première face dirigée vers l'intérieur de la cavité et une zone d'appui sur les tubes de refroidissement située à l'opposé de la première face et une partie de pied prolongeant la partie de tête vers l'extérieur, au-delà des tubes de refroidissement et présentant au moins une ouverture d'assemblage,
- et des moyens d'assemblage et de fixation des blocs reliés au support et coopérant chacun avec les ouvertures d'un ensemble de blocs disposés suivant une rangée rectiligne pour la fixation de ces blocs sur le support, ces moyens étant munis de dispositifs de verrouillage et de déverrouillage accessibles sur un des côtés au moins du divertor pour fixer ou, au contraire, libérer les blocs de la rangée correspondante.

L'invention est également relative à un bloc modulaire utilisé pour constituer la paroi du divertor selon l'invention.

Afin de bien faire comprendre l'invention, on va maintenant décrire, à titre d'exemple non limitatif, en se reportant aux figures jointes en annexe, un mode de réalisation d'un divertor suivant l'invention, dans le cas d'un réacteur dont la cavité présente une forme torique.

La figure 1 est une vue en coupe par un plan vertical suivant 1-1 de la figure 2 d'une partie d'un réacteur à fusion thermonucléaire de forme torique.

La figure 2 est une vue en coupe partielle, aux niveaux A et B indiqués sur la figure 1, de deux secteurs angulaires du tore.

La figure 3 est une vue en coupe suivant 3-3 de la figure 1 d'un divertor suivant l'invention.

La figure 4 est une vue en coupe suivant 4-4 de la figure 3.

La figure 5 est une vue en coupe suivant 5-5 de la figure 3.

La figure 6 est une vue en coupe suivant 6-6 de la figure 7, d'un divertor suivant l'invention et suivant un second mode de réalisation.

La figure 7 est une vue en coupe suivant 7-7 de la figure 6.

Les figures 8, 9 et 10 sont des vues en élévation de blocs modulaires d'un divertor suivant l'invention correspondant à quartre modes de réalisation différents.

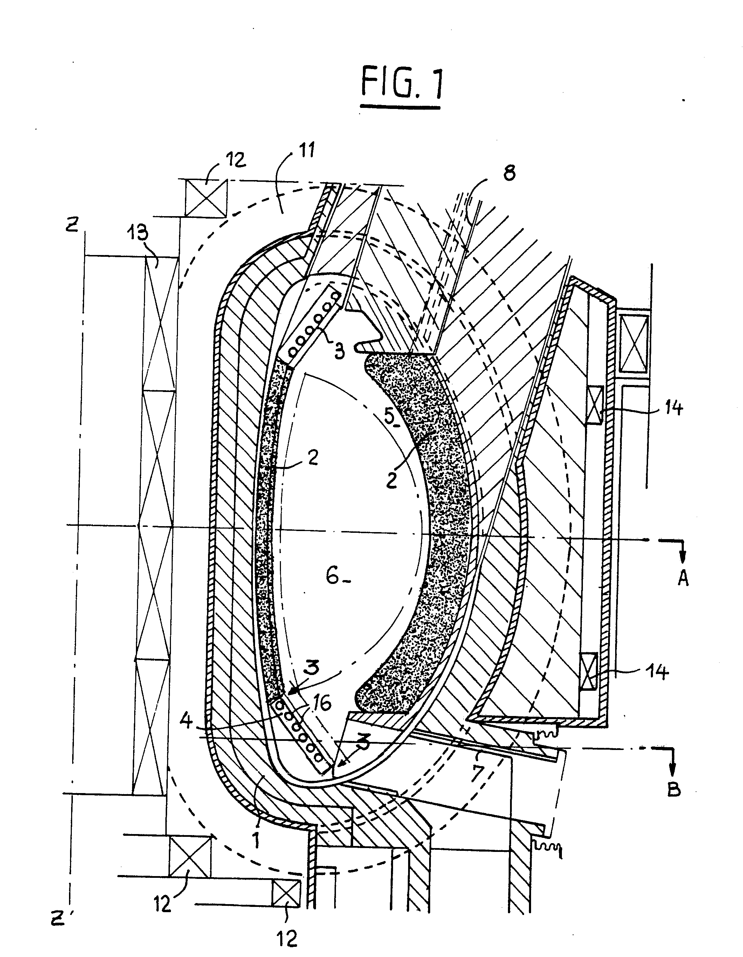

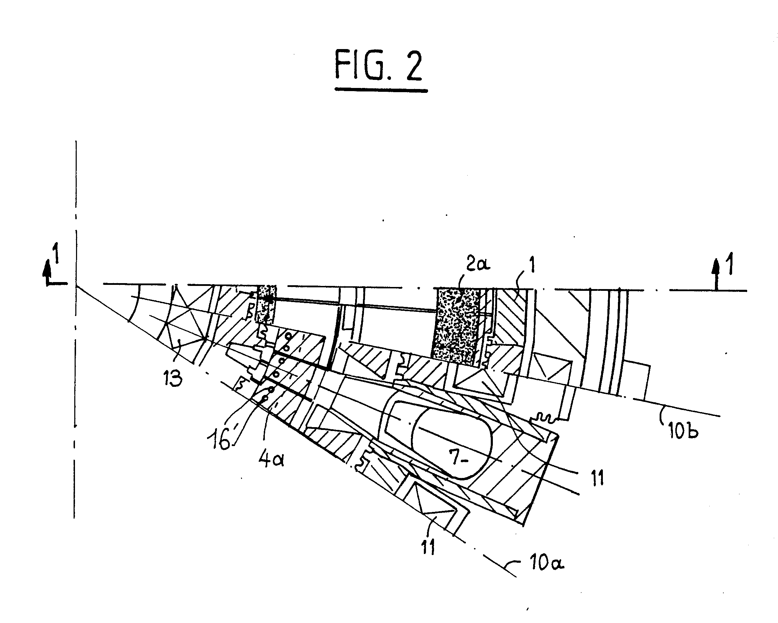

Sur les figures 1 et 2, on voit une partie d'un réacteur à fusion thermonucléaire réalisé sous la forme d'un tore d'axe vertical ZZ'. Le réacteur à fusion thermonucléaire comporte une paroi de blindage 1 de forme torique et de grande épaisseur renfermant dans son volume interne une première paroi en deux parties 2 complétée par un divertor supérieur 3 et un divertor inférieur 4 pour délimiter une cavité torique 5 réalisant le confinement du plasma 6.

La paroi de blindage 1 est percée d'un ouverture 7 permettant de faire le vide dans la cavité 5.

Les deux parties de la première paroi 2 et les divertors 3 et 4 sont constitués par des secteurs tels que 4a et 2a visibles sur la figure 2, disposés les uns à la suite des autres et juxtaposés pour constituer une enveloppe continue. Les secteurs tels que 2a et 4a sont délimités par des plans méridiens du tore tels que 10a et 10b.

La paroi de blindage 4 est traversée par des ouvertures de service telles que 8 permettant l'introduction et la mise en place des secteurs de la première paroi 2 et des divertors 3 et 4, pour constituer la cavité 5 de confinement du plasma.

Des bobinages électromagnétiques 11, 12, 13 et 14 ayant des axes horizontaux ou verticaux sont disposés à la périphérie de l'enveloppe torique 1 et permettent de créer des champs magnétiques intenses dans la cavité 5. Sous l'effet de ces champs magnétiques, le plasma 6 se rassemble suivant un volume de forme torique dont la section méridienne comporte un ou deux points de rebroussement, sans contact avec la paroi 2 et les divertors 3 et 4.

Les divertors 3 et 4 disposés à la partie supérieure et à la partie inférieure de la cavité 5 sont dans ce cas particulier de forme torique à section sensiblement rectangulaire. Ces divertors 3 et 4 se raccordent à la paroi 2 pour assurer la fermeture de la cavité 5.

Le divertor inférieur 4, comme il est visible sur la figure 2, est constitué par des secteurs juxtaposés tels que 4a. La structure de chacun de ces secteurs est traversée par un ensemble de tubes d'échange thermique dans lesquels circule un fluide de refroidissement et permettant d'évacuer le flux d'énergie transmis aux divertors par le plasma 6, principalement sous la forme d'un bombardement par des particules produisant un échauffement de la structure du divertor.

Les tubes peuvent être disposés dans une direction perpendiculaire à la section méridienne du tore (tube 16 représenté sur la figure 1) ou encore dans une direction pratiquement parallèle au plan méridien bissecteur de la section 4a du tore (disposition 16' visible sur la figure 2).

Dans tous les cas, on doit assurer un bon contact thermique entre les tubes et la structure du divertor subissant le bombardement par les particules provenant du plasma.

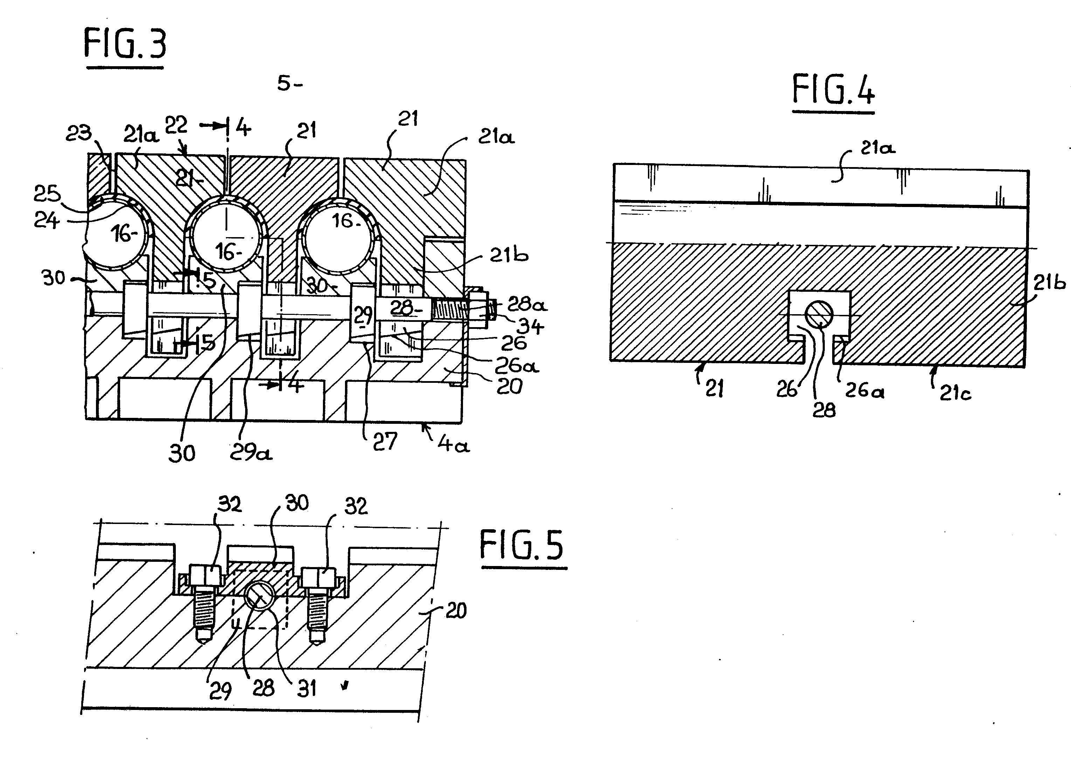

Sur les figures 3, 4 et 5, on a représenté un mode de réalisation d'un divertor constitué par des éléments unitaires 4a traversés par des tubes de refroidissement 16 ayant une disposition perpendiculaire au plan méridien, comme représenté sur la figure 1.

Sur la figure 3, on voit une partie de l'élément 4a en coupe suivant une direction perpendiculaire aux tubes 16 correspondant à la ligne 3-3 visible sur la figure 1.

L'élément 4a comporte un support 20 usiné pour constituer un berceau d'appui pour les tubes de refroidissement 16 et un ensemble de blocs 21 juxtaposés pour constituer la paroi du divertor dirigée vers l'intérieur de la cavité 5.

Chacun des blocs de graphite 21 comporte une partie de tête 21a, de forme sensiblement parallélépipèdique, et une partie de pied 21b de forme également parallèlépipèdique mais d'épaisseur plus faible que la partie de tête. La partie de tête 21a comporte une première face 22 dirigée vers le plasma 6 contenu dans la cavité 5, quatre faces latérales 23 venant en concordance avec les faces 23 correspondantes des blocs 21 voisins et une surface 24 usinée suivant des secteurs cylindriques pour venir en appui sur les tubes 16.

Les dimensions des parties de tête 21a des blocs 21 sont telles qu'il subsiste un interstice entre les faces 23 des blocs voisins. Ce jeu de montage permet de faciliter la dépose et la mise en place des blocs 21, lors du remplacement de blocs usés.

Un jeu est également prévu entre la surface d'appui 24 et le tube 16, les blocs 21 venant en appui chacun sur deux tubes successifs, avec interposition d'un joint 25 en matériau souple. Ce joint souple peut être constitué par exemple par un matériau carboné à bonne conductivité thermique, tel que le graphite expansé et comprimé.

Le support 20 de l'élément 4a du divertor est usiné pour recevoir les parties de pied 21b des blocs 21 qui sont traversées par une ouverture 26 à section rectangulaire débouchant sur le côté inférieur 21c du bloc 21 et délimitée dans l'épaisseur du bloc 21, par une rampe inclinée 26a en deux parties.

Le support 20 comporte également des parties en creux 27 ayant une section rectangulaire dont les dimensions sont un peu supérieures aux dimensions des ouvertures 26. Ces parties en creux 27 sont disposées dans le prolongement des ouvertures 26 et permettent de recevoir des parties à section sensiblement carrée ou rectangulaire 29 d'un moyen d'assemblage 28 des blocs 21, lorsque ce moyen d'assemblage est en position déverrouillée, comme représenté sur la figure 3.

Le moyen d'assemblage 28 est constitué par une tige dont la longueur est un peu supérieure à la longueur de l'élément 4a dans la direction 3-3 représentée sur la figure 1, sur laquelle les parties d'assemblage de forme carrée 29 sont fixées à des distances régulières correspondant à l'espacement des pieds des blocs 21.

Les parties d'assemblage 29 comportent une rampe inférieure 29a dont l'inclinaison correspond à l'inclinaison de la rampe 26a des ouvertures 26. L'angle d'inclinaison sera toujours compris entre 1 et 30° et de préférence entre 1 et 10°. Les parties d'assemblage 29 sont montées rigidement solidaires de la tige 28 qui est filetée à ses deux extrémités telles que 28a visible sur la figure 3.

La tige 28 est montée sur le support 20, comme il est représenté sur la figure 5. Le support 20 comporte, alignées suivant la direction longitudinale 3-3 de l'élément 4a, des portées semi-cylindriques 31, pour recevoir la tige 28, dans les espaces compris entre deux logements de pied d'assemblages 21b. La tige 28 est maintenue sur le support 20 par des paliers 30 disposés au-dessus de chacun des logements 31 et comportant un usinage semi-cylindrique de même diamètre que le logement 31. Chacun des diamètres 31 ménage, avec l'usinage cylindrique du palier 30 correspondant, une ouverture cylindrique d'un diamètre légèrement supérieur au diamètre de la tige 28. Des vis 32 assurent la fixation des paliers 30 sur le support 20.

Les extrémités filetées 28a de la tige 28 sont légèrement saillantes par rapport aux faces d'extrémités de l'élément 4a du divertor et portent des écrous tels que 34 permettant de déplacer la tige 28 en translation suivant la direction axiale de cette tige.

Sur la figure 3, la tige 28 est représentée en position déverrouillée, les parties d'assemblage 29 de cette tige se trouvant en dehors des ouvertures 26 des blocs 21. Les blocs 21 peuvent alors être extraits, la tige 28 étant d'un diamètre inférieur à la largeur de l'ouverture débouchant sur la face 21c du bloc 21. On peut alors assurer le remplacement d'un bloc quelconque situé sur la rangée alignée le long de la tige 28.

La fixation des blocs 21 sur le support 20 peut être réalisée en effectuant le vissage de l'un des écrous 34 et le dévissage du second écrou disposé au voisinage de la face opposée de l'élément 4a, de façon à déplacer la tige 28 dans le sens allant de la gauche vers la droite sur la figure 3 et d'introduire les parties d'assemblage 29 dans les ouvertures 26. Les rampes 29a et 26a coopèrent alors pour que la translation de la tige 28 se traduise par une traction sur l'élément 21 dirigée verticalement et vers le bas sur la figure 3. On réalise ainsi un serrage de la partie 24 de l'élément 21 sur le tube 16, avec interposition du joint souple 25.

Dans la réalisation d'un divertor suivant l'invention, on a utilisé un moyen d'assemblage permettant d'exercer une force de serrage sur le joint 25, entre les blocs 21 et les tubes 16, supérieure à 10 kPa. On obtient ainsi, en utilisant un joint souple en graphite expansé et comprimé, un coefficient de transfert thermique supérieur à $10^4$ W $m^{-2} \cdot K^{-1}$.

Il est bien évident que pour obtenir le desserrage et le déverrouillage des blocs 21, il suffit d'effectuer un serrage et un desserrage simultanés des écrous 34 pour déplacer la tige 28 en translation dans le sens éloignant les parties d'assemblage 29 des ouvertures 26.

La structure et le fonctionnement du dispositif ont été décrits pour une seule rangée de blocs 21 disposés suivant la longueur d'une tige 28 placée dans la direction 3-3 d'un élément 4a du divertor. En réalité, l'élément 4a du divertor comporte une pluralité de rangées parallèles de blocs 21 juxtaposés et associées chacune à une tige d'assemblage 28.

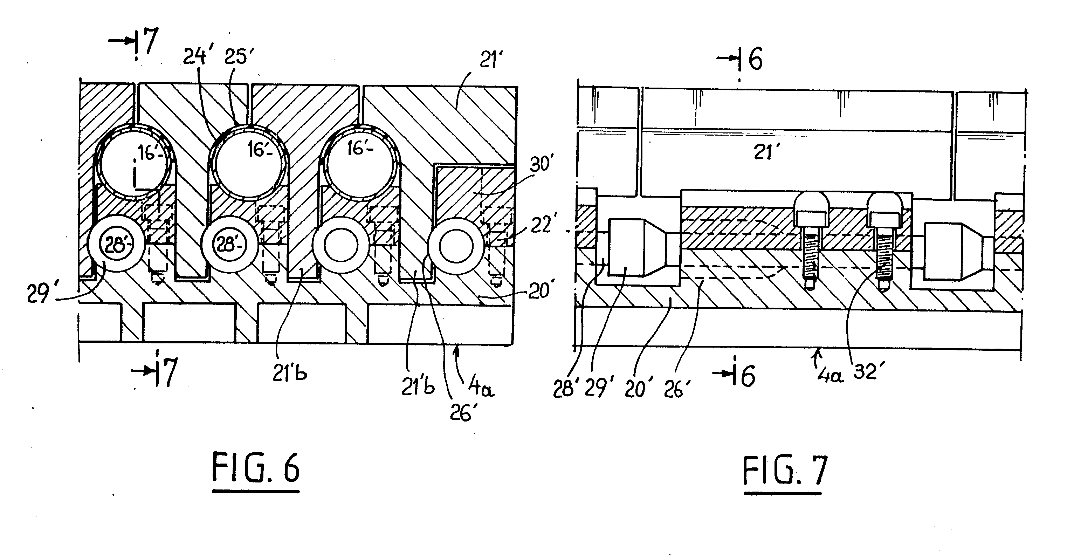

Sur les figures 6 et 7, on voit un second mode de réalisation d'un élément 4a de divertor dont les tubes 16' sont dirigés suivant des directions parallèles au plan méridien central du tore, comme il est visible sur la figure 2.

Les éléments correspondants sur les figures 3, 4 et 5 d'une part et 6 et 7 d'autre part portent les mêmes repères, avec cependant l'exposant ' (prime), pour les éléments représentés sur les figures 6 et 7.

Les blocs 21' en graphite du mode de réalisation des figures 6 et 7 sont pratiquement identiques aux blocs 21 du mode de réalisation des figures 3 à 5.

Cependant, la partie de pied 21'b de ces blocs comporte une partie en creux 26' sur sa surface latérale au lieu d'une ouverture traversante telle que l'ouverture 26 des blocs 21. Cette partie en creux 26' en forme de secteur cylindrique est usinée dans une direction parallèle à l'axe des tubes 16' suivant lesquels sont disposées les rangées de blocs 21' ; dans le cas du premier mode de réalisation, les rangées de blocs 21 étaient disposées dans des directions perpendiculaires aux axes des tubes 16.

Le support 20' de l'élément 4a du divertor est usiné pour recevoir une tige d'assemblage 28' montée coulissante sur le support 20' grâce à des paliers 30' fixés sur le support par des vis 32'. La tige 28' comporte des parties à grand diamètre 29' venues d'usinage raccordées à la partie courante de la tige 28' par des surfaces tronconiques. Le diamètre des parties en creux 26' des blocs 21' correspond au diamètre des parties 29' à grand diamètre de la tige 28'.

Les tiges 28' comportent des extrémités filetées non représentées sur les figures 6 et 7 qui sont légèrement saillantes par rapport aux faces d'extrémité de l'élément 4a et qui portent des écrous permettant de déplacer en translation dans un sens ou dans l'autre les tiges d'assemblage 28'.

Sur la figure 7, la tige 28' a été représentée dans sa position de déverrouillage, les parties à grand diamètre 29' étant éloignées des parties en creux 26' des blocs 21'.

Les blocs 21' de la rangée correspondante peuvent alors être extraits et remplacés.

Le verrouillage de la rangée de blocs 21' peut être réalisé en déplaçant la tige 28' par translation dans le sens allant de la gauche vers la droite sur la figure 7. Les parties à grand diamètre 29' de la tige 28' sont alors amenées à pénétrer dans des ouvertures cylindriques délimitées par les parties en creux des blocs 21', du support 20' et des paliers 30'.

Il est à remarquer que dans le cas de ce second mode de réalisation de l'élément du divertor, le moyen d'assemblage et de verrouillage des blocs 21' ne réalise pas le serrage des joints 25' disposés entre les blocs 21' et les tubes 16'. Le moyen d'assemblage et de verrouillage réalise dans ce cas uniquement la fixation des blocs 21' sur le support 20'.

On pourra remarquer également que les tiges 28' pourraient être, dans ce cas, disposées aussi bien suivant une direction perpendiculaire que suivant une direction parallèle aux axes des tubes 16'. Les figures 6 et 7 correspondant à une représentation des tiges 28' parallèles aux tubes 16'.

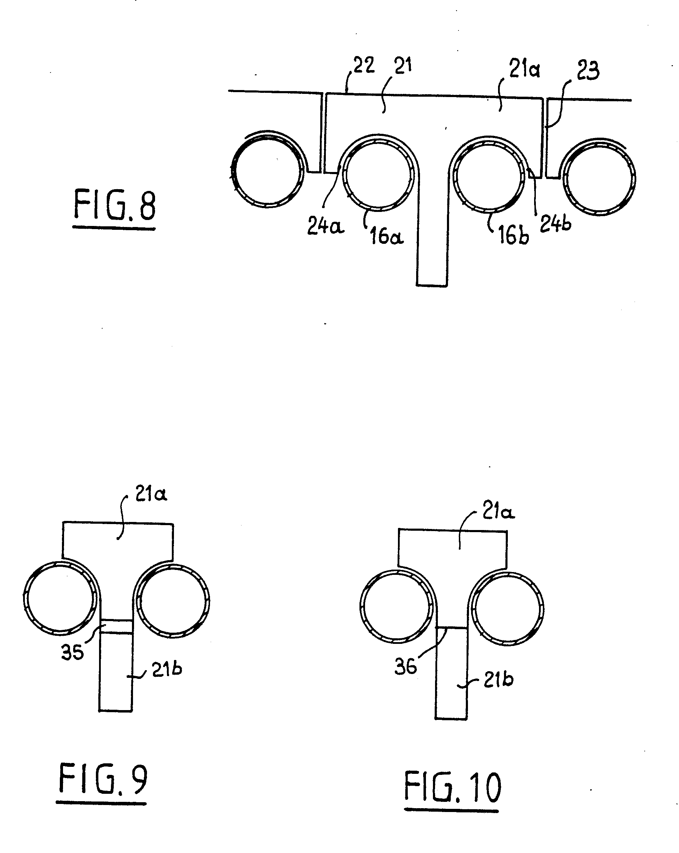

Sur la figure 8, on a représenté une variante de réalisation d'un bloc 21 en graphite, la partie de tête 21a de ce bloc étant élargie par rapport au mode de réalisation déjà décrit et comportant dans sa partie située à l'opposé de la face 22 dirigée vers l'intérieur de la cavité du réacteur, deux parties en creux semi-cylindriques 24a et 24b destinées à venir en appui sur deux tubes de refroidissement correspondant 16a et 16b par l'intermédiaire d'un joint souple. Ce mode de réalisation du bloc de graphite 21 permet de faciliter sa mise en place et la constitution d'une paroi continue par juxtaposition avec d'autres blocs 21. Les parties de raccordement entre les blocs cor respondant aux faces latérales 23 se trouvent alors au-dessus d'un espace ménagé entre deux tubes 16 et non à l'aplomb d'un tube. Les blocs 21 ou 21' permettant le garnissage de la paroi d'un divertor de réacteur à fusion thermonucléaire sont généralement réalisés en graphite et sous forme monolytique. Le graphite présente en effet l'avantage d'être résistant aux hautes températures et d'avoir une très bonne conductibilité thermique.

Cependant, pour accroître la résistance mécanique et thermique des blocs de garnissage, il est souhaitable de réaliser ces blocs en un matériau composite carbone-carbone constitué par un squelette en fibres de carbone enrobé dans une matrice en graphite qui assure la liaison entre les fibres. De tels matériaux sont bien connus dans la réalisation de tuyères et de corps de rentrée dans l'atmosphère.

Les blocs de garnissage peuvent être également réalisés sous une forme composite, la partie de tête et la partie de pied étant en des matériaux différents.

Sur les figures 9 et 10, on a représenté de tels blocs composites comportant une partie de tête 21a en graphite ou en composite carbone-carbone et une partie de pied 21b en molybdène ou en alliage de molybdène.

Dans le cas du mode de réalisation représenté sur la figure 9, on réalise un dépôt de molybdène 35 sur la partie de jonction de la tête 21a puis on soude le pied 21b en molybdène sur cette partie de jonction 35, par faisceau d'électrons ou au laser. Le dépôt de molybdène 35 peut être obtenu par dépôt en phase vapeur et son épaisseur sera avantageusement comprise entre 1 et 2 mm.

Sur la figure 10, on a représenté un second mode de réalisation d'un bloc 21 comportant une tête 21a en graphite ou en composite carbone-carbone et un pied 21b en molybdène. Le pied 21b en molybdène est rendu solidaire de la tête 21a par une brasure 36.

Dans le cas d'un réacteur thermonucléaire à fusion expérimental, le divertor situé à la partie inférieure de la cavité à été réalisé selon l'un des modes de mise en oeuvre de l'invention.

Les tubes de refroidissement du divertor sont disposés suivant des directions sensiblement parallèles à des plans méridiens du tore, comme les tubes 16' de l'exemple de réalisation des figures 6 et 7. La longueur des éléments du divertor, dans la direction axiale des tubes de refroidissement, est de 2,20 mètres. On utilise, pour le garnissage de la paroi du divertor, des blocs dont la partie de tête est en graphite et dont la partie de pied en molybdène est brasée sur la partie de tête, tel que représenté sur la figure 10. Les blocs de graphite constituant des éléments de garnissage sont disposés les uns à la suite des autres dans la direction des tubes pour constituer des rangées. La longueur des blocs dans la direction des rangées est de 150 mm et leur largeur, dans une direction perpendiculaire, de 30 mm. On dispose quinze blocs de garnissage par rangée, les rangées étant séparées par un entraxe de l'ordre de 30 mm.

La fixation des blocs de garnissage est réalisée grâce à des moyens d'assemblage tels que représentés sur les figures 6 et 7. Les blocs sont mis en contact avec les tubes de refroidissement, par l'intermédiaire d'un matériau souple constitué par du graphite expansé et comprimé. Ce produit obtenu sous forme de feuilles d'une épaisseur voisine de 0,2 mm est vendu par la Société Le Carbone Lorraine sous la marque PAPYEX.

Le dispositif suivant l'invention permet de faciliter le remplacement de tout ou partie du garnissage d'un divertor, lorsque celui-ci a subi une certaine érosion en service. Cette opération peut être effectuée à distance en utilisant un télémanipulateur. Les opérations nécessaires pour le remplacement de blocs de garnissage sont très simples puisqu'il suffit d'actionner le dispositif de déverrouillage de la rangée correspondante, puis d'extraire le ou les blocs à remplacer et enfin d'introduire à leur place des blocs neufs ayant les mêmes caractéristiques géométriques.

On effectue enfin le verrouillage du dispositif d'assemblage par simple manipulation de deux écrous.

Toutes ces opérations peuvent être réalisées de manière très simple en télémanipulation.

L'invention ne se limite pas aux modes de réalisation qui ont été décrits.

C'est ainsi qu'on peut imaginer l'utilisation de blocs de garnissage d'une forme différente de celles qui ont été décrites. La tête de ces blocs peut avoir une forme prismatique différente de la forme parallèlépipèdique.

La partie de pied peut avoir également une forme quelconque et présenter des ouvertures d'assemblage ayant des formes et des positions différentes.

On peut utiliser d'autres matériaux que le graphite pour réaliser les blocs de garnissage, à partir du moment où ces matériaux ont une bonne résistance à la chaleur et une bonne conductibilité thermique.

## Revendications

1.- Dispositif de refroidissement d'un réacteur à fusion thermonucléaire qui comporte une cavité (5) de confinement d'un plasma (6) délimitée par une première paroi (2) complétée par au moins un dispositif de refroidissement (3, 4) appelé "divertor", la paroi (2) et le divertor (3, 4) étant constitués sous forme modulaire par des éléments juxtaposés et chacun des éléments modulaires (4a) du divertor comportant un support (20, 20′) et un ensemble de tubes (16, 16′) d'échange thermique sensiblement parallèles entre eux pour la circulation d'un fluide de refroidissement, caractérisé par le fait que les éléments (4a) du divertor comportent chacun :

- un ensemble de blocs modulaires (21, 21′) en matériau conducteur et résistant à la chaleur, juxtaposés pour constituer une paroi de délimitation de la cavité (5) et comportant chacun une partie de tête (21a) de forme prismatique ayant une première face (22) dirigée vers l'intérieur de la cavité (5) et une zone d'appui (24) sur les tubes (16, 16′) de refroidissement située à l'opposée de la première face (22) et une partie de pied (21b) prolongeant la partie de tête (21a) vers l'extérieur au-delà des tubes de refroidissement (16, 16′) et présentant au moins une ouverture d'assemblage (26, 26′),

- et des moyens d'assemblage et de fixation des blocs (21, 21′) reliés au support (20, 20′) et coopérant chacun avec les ouvertures (26, 26′) d'un ensemble de blocs (21, 21′) disposés suivant une rangée rectiligne, pour la fixation de ces blocs (21, 21′) sur le support (20, 20′), ces moyens d'assemblage (28, 28′) étant munis de dispositifs de verrouillage et de déverrouillage (34) accessibles sur un des côtés de l'é lément (4a) du divertor pour fixer ou, au contraire, libérer les blocs (21, 21′) de la rangée correspondante.

2.- Dispositif de refroidissement suivant la revendication 1, caractérisé par le fait que les moyens d'assemblage et de fixation (28) des blocs (21) sont constitués chacun par une tige (28) solidaire de parties de fixation (29) d'une forme correspondant à la forme des ouvertures (26) des pieds (21b) des blocs (21), montée mobile en translation dans la direction des rangées des blocs (21) sur le support (20), entre une position de verrouillage où les parties de fixation (29) sont engagées dans les ouvertures (26) et une position de déverrouillage où les parties de fixation (29) sont à l'extérieur des ouvertures (26).

3.- Dispositif suivant la revendication 2, caractérisé par le fait que chacune des tiges (28) comporte des extrémités (28a) filetées sur lesquelles sont engagés des écrous (34) pour le déplacement de la tige (28) en translation.

4.- Dispositif suivant l'une quelconque des revendications 2 et 3, caractérisé par le fait que les ouvertures (26) des parties de pied (21b) des blocs (21) et les parties de fixation (29) des tiges (28) comportent des surfaces inclinées (26a, 29a) correspondantes, pour le serrage des zones (24) des blocs (21) sur les tubes de refroidissement (16).

5.- Dispositif suivant l'une quelconque des revendications 1 à 4, caractérisé par le fait qu'un joint souple (25, 25′) en matériau à bonne conductibilité thermique est intercalé entre les zones (24) des blocs (21) et les tubes (16).

6.- Dispositif suivant la revendication 5, caractérisé par le fait que le matériau souple est constitué par du graphite expansé puis comprimé.

7.- Bloc modulaire de garnissage d'un dispositif de refroidissement d'un réacteur à fusion thermonucléaire qui comporte une cavité (5) de confinement d'un plasma délimitée par une première paroi complétée par au moins un dispositif de refroidissement appelé "divertor", comportant un ensemble de tubes (16′) d'échange thermique sensiblement parallèles entre eux dans lesquels circule un fluide de refroidissement, caractérisé par le fait qu'il comporte une partie de tête (21a) de forme prismatique et comportant une zone (24, 24′) d'appui sur les tubes de refroidissement (16) et une partie de pied (21b) prolongeant la partie de tête (21a) au-delà des zones (24) d'appui des tubes (16) et comportant au moins une ouverture (26, 26′).

8.- Bloc modulaire suivant la revendication 6, caractérisé par le fait que sa partie de tête (21a) est en graphite.

9.- Bloc modulaire suivant la revendication 6, caractérisé par le fait que sa partie de tête (21a) est en un matériau composite carbone-carbone constitué de fibres de carbone dans une matrice de graphite.

10.- Bloc modulaire suivant l'une quelconque des revendications 7 et 8, caractérisé par le fait que sa partie de pied (21b) est en molybdène ou en alliage de molybdène.

11.- Bloc modulaire suivant la revendication 10, caractérisé par le fait que la partie de tête (21a) comporte une zone de jonction (35) sur laquelle est réalisé un dépôt de molybdène et que la partie de pied (21b) est soudée sur la partie de jonction (35) revêtue de molybdène.

12.- Bloc modulaire suivant la revendication 10, caractérisé par le fait que la partie de pied (21b) est brasée sur la partie de tête (21a).

FIG. 1

0277892

0277892

# FIG. 2

# FIG.3

5-

23  21a  22  →|4  21  21  21a

25
24

30

16-  16-  16-

16-

21b

30-

15  29  28-  28a
34

29  15

26
26a
20

30  29a  27  4a

# FIG.4

21a

21b

21  26  26a  21c

28

# FIG.5

32  30  32

20

29  28  31

0277892

FIG.7

FIG.6

0277892

**FIG.8**

22 21 21a 23

24a 16a 16b 24b

21a

35 21b

**FIG.9**

21a

36 21b

**FIG.10**

Office européen des brevets

RAPPORT DE RECHERCHE EUROPEENNE

Numero de la demande

EP 88 42 0018

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PROCEEDINGS OF THE 11TH SYMPOSIUM ON FUSION ENGINEERING, Austin, Texas, 18-22 novembre 1985, vol. 2, pages 1174-1177, IEEE, New York, US; T.E. McKELVEY et al.: "DIII-D vacuum vessel protection system" * Page 1174, colonne 1, lignes 14-22,25-29; colonne 1, ligne 54 - colonne 2, ligne 7; page 1176, colonne 2, ligne 35 - page 1177, colonne 1, ligne 12; colonne 1, lignes 54-56; colonne 2, lignes 7-14; figures 1-5 * | 1-12 | G 21 B 1/00 |
| A | EP-A-0 117 136 (HITACHI LTD) * Résumé; page 10, ligne 22 - page 12, ligne 9; page 14, lignes 16-21 * | 1,5,6 | |
| A | FR-A-2 065 763 (LE CARBONE-LORRAINE S.A.) * Page 1, lignes 1-8 * | 1,5,6 | |
| A | NUCLEAR TECHNOLOGY/FUSION, vol. 2, no. 4, octobre 1982, pages 712-722, ANS, Denville, Illinois, US; H.W. KUGEL et al.: "The design of the Poloidal Divertor Experiment Tokamak wall armor and inner limiter system" * Résumé; figures 4,7 * | 1 | **DOMAINES TECHNIQUES RECHERCHES (Int. Cl.4)** <br><br> G 21 B 1 <br> H 05 H |
| A | PROCEEDINGS OF THE 11TH SYMPOSIUM ON FUSION ENGINEERING, Austin, Texas, 18-22 novembre 1985, vol. 2, pages 877-880, IEEE, New York, US; M. SHIBUI et al.: "Thermal shock behavior of first-wall material candidates" * Figure 2 * <br><br> ---       -/- | 1 | |

Le présent rapport a été établi pour toutes les revendications

| Lieu de la recherche | Date d'achèvement de la recherche | Examinateur |
|---|---|---|
| LA HAYE | 18-04-1988 | GALANTI M. |

Office européen
des brevets

**RAPPORT DE RECHERCHE EUROPEENNE**

Numero de la demande

EP  88 42 0018

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PROCEEDINGS OF THE 9TH SYMPOSIUM ON ENGINEERING PROBLEMS OF FUSION RESEARCH, Chicago, Illinois, 26-29 octobre 1981, vol. 2, pages 1589-1592, IEEE, New York, US; L. SEVIER et al.: "Design of the TFTR phase II bumper limiter" * Figure 2 * | 1 | |
| A | PROCEEDINGS OF THE 11TH SYMPOSIUM ON FUSION ENGINEERING, Austin, Texas, 18-22 novembre 1985, vol. 2, pages 928-931, IEEE, New York, US; F. BROSSA et al.: "Experimental testing and theoretical analysis of samples of a divertor plate proposed for NET" * Figure 2 * | 1 | |
| A | WO-A-8 505 214 (MAX-PLANCK-GESELLSCHAFT ZUR FÖRDERUNG DER WISSENSCHAFTEN E.V.) * Résumé * | 1 | DOMAINES TECHNIQUES RECHERCHES (Int. Cl.4) |

Le présent rapport a été établi pour toutes les revendications

| Lieu de la recherche | Date d'achèvement de la recherche | Examinateur |
|---|---|---|
| LA HAYE | 18-04-1988 | GALANTI M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&  : membre de la même famille, document correspondant

EPO FORM 1503 03.82 (P0402)